Europäisches Patentamt

European Patent Office

Office européen des brevets

(11) EP 1 545 020 A1

(19)

(12) **EUROPEAN PATENT APPLICATION**
published in accordance with Art. 158(3) EPC

(43) Date of publication:
**22.06.2005 Bulletin 2005/25**

(21) Application number: **03791408.2**

(22) Date of filing: **29.08.2003**

(51) Int Cl.7: **H04B 1/707**

(86) International application number:
**PCT/JP2003/011017**

(87) International publication number:
**WO 2004/021597 (11.03.2004 Gazette 2004/11)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.08.2002 JP 2002255405**

(71) Applicants:
• **Yokohama TLO Company, Ltd.
Yokohama-shi, Kanagawa 240-8501 (JP)**
• **Suehiro, Naoki
Tsukuba-shi, Ibaraki 305-0031 (JP)**

(72) Inventors:
• **SUEHIRO, Naoki
Tsukuba-shi, Ibaraki 305-0031 (JP)**
• **HAN, Chenggao,
c/o Graduate Sch. Syst. & Info. Eng
Tsukuba-shi, Ibaraki (JP)**

(74) Representative: **Strehl Schübel-Hopf & Partner
Maximilianstrasse 54
80538 München (DE)**

(54) **TRANSMITTED-SIGNAL PRODUCING METHOD, COMMUNICATING METHOD, AND DATA STRUCTURE OF TRANSMITTED SIGNAL**

(57)    When transmission data is modulated via spread spectrum, not a spreading sequence itself but a transmission data sequence is processed to make the periodic spectrum of a transmission signal a non-correlated spectrum to reduce an increase in the amplitude of the signal and to reduce the dynamic range of an amplifier on a receiving side. A transmission signal production method comprises the steps of multiplying the transmission data by the coefficients of a predetermined coefficient sequence to produce a plurality of transmission data; and adding 0 data of a predetermined length between the plurality of transmission data, produced by multiplying the transmission data by the coefficients, to produce a transmission data sequence.

Fig. 1

## Description

### TECHNICAL FIELD

The present invention relates to a transmission signal production method, a communication method using the transmission signal, and a data structure of the transmission signal and, more particularly, is advantageous to a multi-path environment such as that of mobile communication.

### BACKGROUND ART

As a demand for data communication is increased in cellular wireless communication and various mobile environments, there is a need for a technology that increases the utilization of wireless frequency resources. For example, in the communication method using the CDMA method, the correlation characteristics of a spreading sequence and the inter-channel interference due to the multi-path characteristics of a transmission path are factors that limit the frequency utilization.

Because the method using Orthogonal Frequency Division Multiplexing (OFDM) is frequency multiplexing using a sine wave, the effect of a multi-path appears as the fading of a signal power and, therefore, there is a problem that it is difficult to separate a transmitted sine wave signal from a multi-path sine wave signal.

On the other hand, the CDMA method can use a pilot signal to separate a transmission signal from a multi-path signal transmitted at the same frequency and at the same time.

The CDMA method is a multiple access method using the spread spectrum communication method. In this spread spectrum communication method, modulation is performed using a spreading code sequence. For example, a periodic sequence with no autocorrelation is used as the spreading code sequence.

For example, as the spreading code sequence that separates the original transmission signal from a multi-path signal, a communication method using a complete complementary sequence is proposed. The complete complementary sequence is a sequence having the auto-correlation characteristics where the sum of the auto-correlation function of the sequences is 0 for all shifts except the 0-shift and the cross-correlation characteristics where the sum of the cross-correlation function of the sequences is always 0 for all shifts. A complete complementary sequence is used to produce a ZCZ(Zero-Correlation-Zone)-CDMA signal, free of a side lobe and an inter-channel interference, to make the periodic spectrum of the transmission signal a non-correlation spectrum. This makes it possible to allocate the same frequency and the same time to the pilot signal and the transmission signal.

The problem with the spread spectrum communication method, which uses a conventionally proposed complete complementary sequence, is that the amplitude of a digitally modulated wireless signal is increased and a large dynamic range is required.

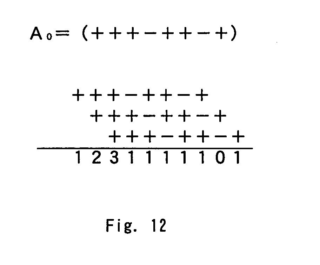

FIG. 12 shows an example of a signal that uses a complete complementary sequence as the spreading code sequence. The signal sequence A0 (=+++-++-+) is an example of a binary signal generated using a complete complementary sequence. In this example, "+" represents a "1", and "-" represents a "-1".

When the multi-path characteristics affect the received signal of this example and a delay time is caused, the received signal transmitted via multi-path transmission lines is received as the signal sequence of "1, 2, 3, 1, 1, 1,...". The increase in the amplitude of this signal is, for example, from 0 to 3, and the receiving side amplifier must have a dynamic range for this increase in the amplitude.

If a dynamic range enough for this increase in the amplitude cannot be accommodated, the output signal is distorted by the non-linearity of the input/output characteristics of the amplifier, a frequency spectrum is generated also in a bandwidth other than that of the input signal, and the spurious characteristics are degraded. In addition, a distortion in the output waveform generates an inter-symbol interference on the receiving side and degrades the error rate. Amplifying the signal using the good linearity part of the amplifier increases the power consumption of the amplifier. An increase in the power consumption results in a decrease in the standby time of a mobile terminal.

In view of the foregoing, it is an object of the present invention to solve the conventional problems described above, to reduce an increase in the amplitude of the signal during the modulation of transmission data through spread spectrum, and to reduce the dynamic range of an amplifier on the receiving side.

### DISCLOSURE OF THE INVENTION

When transmission data is modulated via spread spectrum, a spreading sequence itself is processed in the prior art to make the periodic spectrum of a transmission signal a non-correlated spectrum. By contrast, when transmission data is modulated via spread spectrum according to the present invention, not the spreading sequence itself is processed as in the prior art but a transmission data sequence is processed to make the periodic spectrum of the transmission signal a non-correlated spectrum. Making the periodic spectrum of the transmission signal a non-correlated spectrum reduces an increase in the amplitude of a signal and reduces the dynamic range of an amplifier on the receiving side.

A transmission signal production method according to the present invention comprises the steps of multiplying transmission data by coefficients of a predetermined coefficient sequence to produce a plurality of transmission data; and adding 0 data of a predetermined length between the plurality of transmission data, produced by multiplying the transmission data by the coefficients, to produce a transmission data sequence, and the transmission data sequence created in this way is used as a transmission signal.

The transmission data is digital data including information to be transmitted. On the other hand, the produced transmission data sequence becomes a transmission signal composed by arranging a plurality of transmission data. In the arrangement of the plurality of transmission data, the transmission data is multiplied by the coefficients of the predetermined coefficient sequence, and the transmission data and 0-data of a predetermined length are arranged alternately.

According to a first method for producing the transmission data sequence, the plurality of transmission data, produced by multiplying the transmission data by the coefficients, are arranged at intervals by delaying for a time longer than the data length of the transmission data and a predetermined number of 0 data are arranged between neighboring transmission data.

According to a second method for producing the transmission data sequence, a predetermined number of 0 data are added to the end of the transmission data, the transmission data to which the 0 data are added is multiplied by the coefficients of the predetermined coefficient sequence to produce the plurality of transmission data, and the plurality of transmission data, produced by multiplying the transmission data by the coefficients, are arranged in order of coefficients of the coefficient sequence to produce the transmission data sequence. Alternatively, the transmission data is multiplied by the coefficients of the predetermined coefficient sequence to produce the plurality of transmission data, the predetermined number of 0 data are added to the end of each transmission data, produced by multiplying the transmission data by the coefficients, and the transmission data to which the 0 data are added are arranged in order of coefficients of the coefficient sequence to produce the transmission data sequence.

Another mode of the transmission signal production method according to the present invention is a signal production method wherein a plurality of transmission data sequences are produced using different coefficient sequences and, in an arbitrary combination of two different transmission data sequences, a transmission data sequence is produced so that a finite number of the transmission data included in the transmission data sequence have a range in which a non-periodic cross-correlation function is 0. The non-periodic cross-correlation function is a cross-correlation function between transmission data sequences having a finite, not infinite, number of transmission data. The periodic spectrum of the transmission signal is made a non-correlation spectrum by producing the transmission data sequence having a finite number of transmission data so that this cross-correlation function has a range in which its value becomes 0.

The coefficient sequence used for the transmission signal production according to the present invention can be selected from a ZCZ sequence, can be a coefficient sequence of an arbitrary vector row selected from a complete complementary sequence, and can be produced using a unitary matrix.

A communication method according to the present invention comprises the steps of transmitting the transmission data sequence produced by the transmission signal production method according to the present invention; and receiving transmission data via a matched filter corresponding to the coefficient sequence used for producing the transmission data sequence.

In the communication method according to the present invention, the transmission data sequence is used as a pilot signal for measuring multi-path characteristics and the multi-path characteristics of a transmission line can be obtained by receiving this pilot signal.

In another mode of the communication method according to the present invention, a plurality of transmission data sequences are produced using different coefficient sequences and at least one transmission data sequence selected from the transmission data sequences is used as a pilot signal with other transmission data sequences used as transmission signals. The communication method further comprising the steps of finding multi-path characteristics from the reception signal of the pilot signal; and removing the multi-path characteristics from the reception signal of the transmission signal using the multi-path characteristics, which are found, to produce the transmission data.

Because the periodic spectrum of the pilot signal does not correlate with that of the transmission signal, the signals can be separated by passing them through the corresponding matched filters. The pilot signal is used to obtain the multi-path characteristics from the relation between the transmission signal and the reception signal, and the transmission signal can be obtained from the multi-path characteristics and the reception signal.

The data structure of the transmission signal according to the present invention is a data structure wherein a plurality of transmission data, produced by multiplying transmission data by coefficients of a predetermined coefficient sequence, are arranged with 0 data of a predetermined length added between the plurality of the transmission data. The data structure can be produced by the transmission signal production method according to the present invention.

BRIEF DESCRIPTION OF THE DRAWINGS

FIG. 1 is a general diagram showing a transmission signal production method according to the present invention and the data structure of a transmission signal according to the present invention; FIG. 2 is a diagram showing an example of a unitary matrix; FIG. 3 is a diagram showing an example of a transmission data sequence according to the present invention produced by applying a unitary matrix to transmission data; FIG. 4 is a diagram showing the relation between transmission data and a transmission data sequence according to the present invention; FIG. 5 is a diagram showing the relation between an input/output signal and a matched filter according to the present invention; FIG. 6 is a diagram showing the status of a data sequence when a signal passes through a matched filter; FIG. 7 is a diagram showing the relation between a pilot signal and transmission signals according to the present invention; FIG. 8 is a diagram showing the detection of multi-path characteristics using the pilot signal according to the present invention; FIG. 9 is a diagram showing the communication status of the transmission signal according to the present invention; FIG. 10 is a diagram showing the communication status of the transmission signal according to the present invention; FIG. 11 is a diagram showing an example of the configuration of matched filters applied to the present invention; and FIG. 12 is a diagram showing an example of a signal using a complete complementary sequence as a spreading code sequence.

BEST MODE FOR CARRYING OUT THE INVENTION

A transmission signal production, a communication method, and the data structure of a transmission signal in the best mode for carrying out the present invention will be described below with reference to the drawings. The following describes embodiments of the present invention in detail with reference to the drawings.

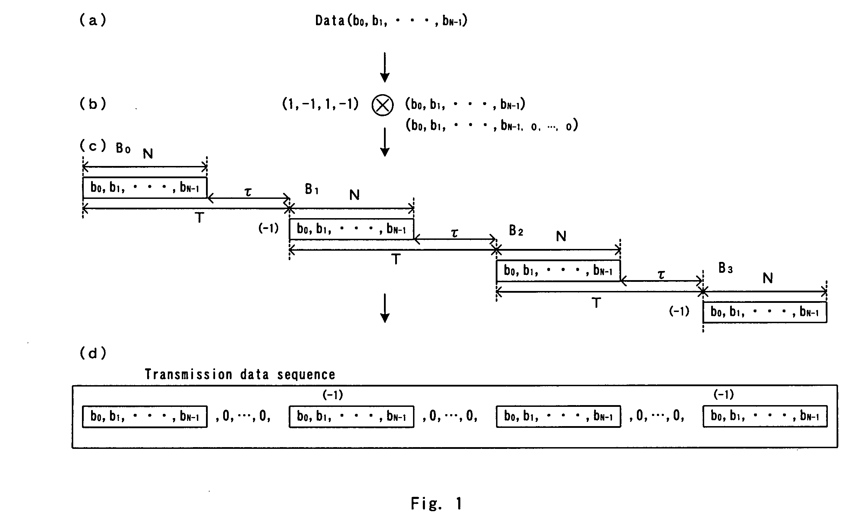

FIG. 1 is a general diagram showing a transmission signal production method of the present invention and the data structure of a transmission signal of the present invention.

According to the present invention, a transmission data sequence (shown in FIG. 1(c)) is produced from transmission data b (=(b0, b1, b2, b3, ..., bN-1)) (shown in FIG. 1(a)) by using a spreading sequence, and this transmission data sequence is used as a transmission signal. N is an arbitrary integer, and the data length of the transmission data is arbitrary N bits.

To produce the transmission data sequence B from the transmission data (b0, b1, b2, b3, ..., bN-1) (shown in FIG. 1(a)), the transmission data (b0, b1, b2, b3, ..., bN-1) is multiplied by the coefficients of a coefficient sequence (1, -1, 1, -1) of a predetermined spreading sequence (shown in FIG. 1(b)) to produce a plurality of transmission data B0(=(b0, b1, b2, b3, ..., bN-1)), B1 (=(-1)·(b0, b1, b2, b3, ..., bN-1)), B2(=(b0, b1, b2, b3, ..., bN-1)), and B3(=(-1)·(b0, b1, b2, b3, ..., bN-1)). The processing, in which the transmission data b (=(b0, b1, b2, b3, ..., bN-1)) is multiplied by the coefficients of the coefficient sequence (1, -1, 1, -1) of a predetermined spreading sequence, is represented by the Kronecker product as shown in FIG. 1(b).

Next, as shown in FIG. 1(c), the plurality of transmission data, produced by multiplying the transmission data by the coefficients, are arranged at an interval by delaying each data for an interval of the predetermined length of T with a predetermined number of 0 data placed between each two transmission data pieces corresponding to the delay time of $\tau$. The predetermined length T is set longer than the transmission data length N, and the data of zeros corresponding to (T-N) bits are arranged. This produces a transmission data sequence such as the one shown in FIG. 1(d). The interval between transmission data is created by delaying from the terminating end of transmission data to the starting end of the next transmission data for a predetermined time of $\tau$. Arranging the plurality of transmission data as described above creates an interval of time corresponding to (T-N) bits between each two transmission data pieces.

Instead of delaying the transmission data (b0, b1, b2, b3, ..., bN-1), produced by multiplying the transmission data by the coefficients of the predetermined coefficient sequence (1, -1, 1, -1), for a predetermined time, it is also possible to add (T-N) bits of 0 data to the end of the transmission data (b0, b1, b2, b3, ..., bN-1) to produce transmission data (b0, b1, b2, b3, ..., bN-1, 0, ...,0) whose total data length is T bits; to multiply the transmission data, to which the 0 data is added, by the coefficients of the predetermined coefficient sequence (1, -1, 1, -1) to produce a plurality of transmission data (b0, b1, b2, b3, ..., bN-1, 0, ..., 0), (-1)·(b0, b1, b2, b3, ..., bN-, 0, ..., 01), (b0, b1, b2, b3, ..., bN-1, 0, ..., 0), and (-1)·(b0, b1, b2, b3, ..., bN-1, 0, ..., 0); and to arrange them in order of the coefficient sequence to produce a transmission data sequence. Adding the (T-N) bits of 0 data corresponds to the operation of delaying for the time of $\tau$.

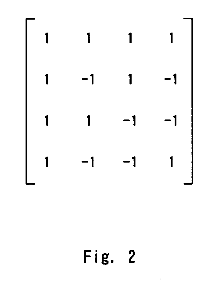

The ZCZ sequence used here is a sequence having a periodic zero correlation zone that has the zero auto-correlation zone characteristics and zero cross-correlation zone characteristics. For example, a complete complementary sequence can be used as the predetermined coefficient sequence. A complete complementary sequence is a sequence having the auto-correlation characteristics where the sum of the auto-correlation function of the sequences is 0 for all shifts except 0 shift and the cross-correlation characteristics where the sum of the cross-correlation function of the sequences is always 0 for all shifts. For example, a unitary matrix shown in FIG. 2 can be used.

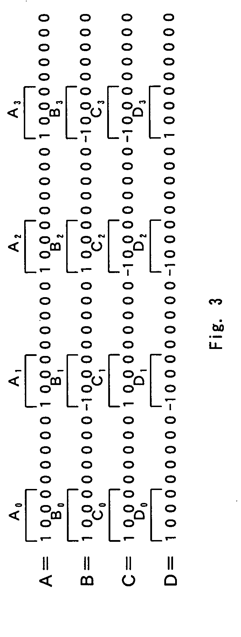

FIG. 3 shows an example of a transmission data sequence produced by multiplying transmission data A0-A3, B0-B3, C0-C3, and D0-D3 by the coefficients of each vector row of the unitary matrix and by adding a predetermined number of 0 data.

A plurality of transmission data can be produced by using the original transmission data (1, 0, 0, 0) and by multiplying it by the coefficients of each vector row of the unitary matrix shown in FIG. 2. The transmission data obtained from the first vector row of the unitary matrix is A0=(1, 0, 0, 0), A1=(1, 0, 0, 0), A2=(1, 0, 0, 0), and A3=(1, 0, 0, 0) corresponding to the coefficients. The transmission data obtained from the second vector row of the unitary matrix is B0=(1, 0, 0, 0), B1=(-1, 0, 0, 0), B2=(1, 0, 0, 0), and B3=(-1, 0, 0, 0) corresponding to the coefficients. The transmission data obtained from the third vector row of the unitary matrix is C0=(1, 0, 0, 0), C1=(1, 0, 0, 0), C2=(-1, 0, 0, 0), and C3=(-1, 0, 0, 0) corresponding to the coefficients. The transmission data obtained from the fourth vector row of the unitary matrix is D0=(1, 0, 0, 0), D1=(-1, 0, 0, 0), D2=(-1, 0, 0, 0), and D3=(1, 0, 0, 0) corresponding to the coefficients.

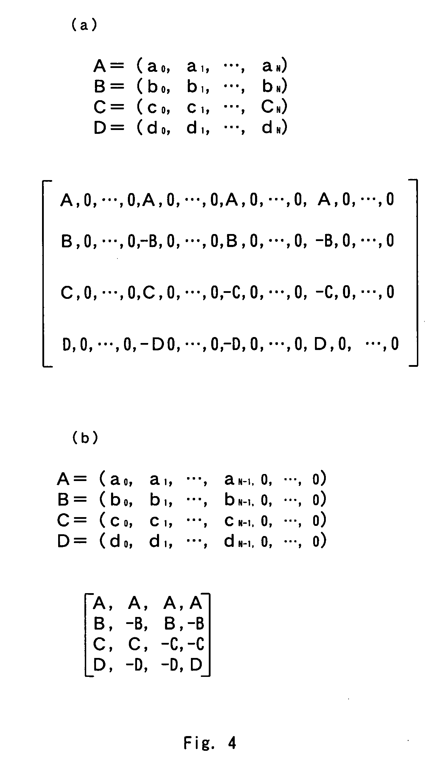

The transmission data sequence is produced by delaying, and adding 0 data to, the plurality of transmission data. FIG. 4 shows the relation between the transmission data and the transmission data sequence using a general expression. When the transmission data A-D are represented by A=(a0, a1, ..., aN-1), B=(b0, b1, ..., bN-1), C=(c0, c1, ..., cN-1), and D=(d0, d1, ..., dN-1), the transmission data sequence can be produced by adding 0 data to them as shown by the determinant in FIG. 4(a).

When the transmission data A-D are represented by A=(a0, a1, ..., aN-1, 0, ..., 0), B=(b0, b1, ..., bN-1, 0, ..., 0), C=(c0, c1, ..., cN-1, 0, ..., 0), and D=(d0, d1, ..., dN-1, 0, ..., 0), the transmission data sequence can be represented by the determinant in FIG. 4(b).

Next, the communication method according to the present invention that uses a produced transmission signal will be described.

A produced transmission signal can be acquired by a matched filter (matched filter) corresponding to the coefficients of the spreading sequence used for producing the transmission signal. For example, a matched filter, which is a filter that de-spreads the transmission data A and acquires the de-spread data, is formed corresponding to the coefficients of the spreading sequence used for producing the transmission data A.

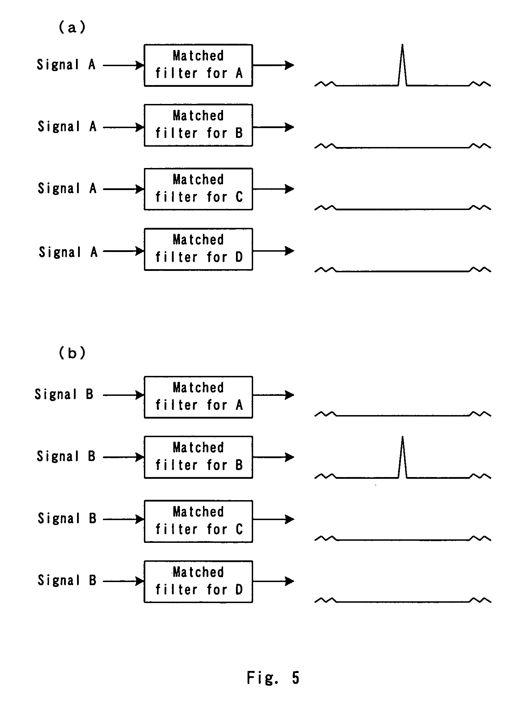

The relation between an input/output signal and a matched filter is determined based on the complete complementarity of a spreading sequence. FIG. 5 is a diagram showing the relation between an input/output signal and a matched filter.

For example, when the signal A is passed through the matched filter for the signal A in FIG. 5(a), an impulse-like signal can be acquired due to the auto-correlation characteristics. However, when the signal A is passed through a matched filter other than the matched filter for the signal A (matched filter for the signal B to matched filter for the signal D), the signal cannot be acquired due to the cross-correlation characteristics.

When the signal B is passed through the matched filter for the signal B in FIG. 5(b), an impulse-like signal can be acquired due to the auto-correlation characteristics. However, when the signal B is passed through a matched filter other than the matched filter for the signal B (matched filter for the signal A, matched filter for the signal C, matched filter for signal D), the signal cannot be acquired due to the cross-correlation characteristics.

Next, the following describes that the transmission signal production according to the present invention can suppress an increase in the amplitude of a transmission signal.

According to the transmission signal production of the present invention, a plurality of transmission data, produced by multiplying them by the coefficients of the ZCZ sequence, are arranged with a delay between each two of them to allow a finite number of data sequences of transmission data to have a periodic zero correlation zone for producing an impulse-like signal.

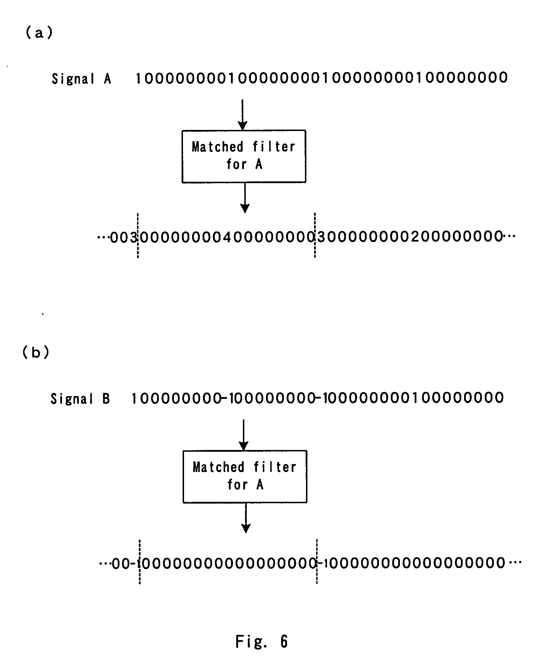

Referring to FIG. 6, the status of a data sequence when the signal is passed through a matched filter will be described.

FIG. 6 (a) shows the status of a data sequence when the signal A is passed through the matched filter for the signal A.

The transmission signal according to the present invention can be represented as follows by applying a delay time to the ZCZ sequence based on a complete complementary sequence.

$$aA = a(A0)0 + a(A1)T + a(A2)2T + a(A3)3T$$

where $(\cdot)T$ is the time delay of a T time slot (T chip) and the signal length of aA is 4T.

The data signal A shown in FIG. 3 corresponds to a case in which the signal of (AN) is (1, 0, 0, 0) and T=9 in the expression described above.

The signal produced by passing this signal A through the matched filter for the signal A can be calculated by the convolution between the signal A and the matched filter A as follows.

$$aA*Af = 4a(x, x, ..., x, x, 0, 0, 0, 0, 0, 0, 0, 0, 1,$$
$$0, 0, 0, 0, 0, 0, 0, 0, x, x, ..., x, x)$$

Note that Af corresponds to the matched filter.

The signal produced by the above expression is an impulse-like signal, and the increase in the amplitude can be suppressed.

On the other hand, FIG. 6(b) shows the status of a data sequence when the signal B is passed through the matched filter for the signal A.

The transmission signal B is represented as follows.

$$aB = a(B0)0 - a(B1)T - a(B2)2T + a(B3)3T$$

The data signal B shown in FIG. 3 corresponds to a case in which the signal of (BN) is (1, 0, 0, 0) and T=9 in the expression described above.

The signal produced by passing this signal B through the matched filter for the signal A can be calculated by the convolution between the signal B and the matched filter A, and the signal produced by passing the signal B through the matched filter for the signal A is as follows.

$$aB*Af = a (0, 0, ..., 0, -1, 0, 0, 0, 0, 0, 0, 0, 0,$$

$$0, 0, 0, 0, 0, 0, 0, 0, -1, 0, ..., 0, 0)$$

Note that, in the above two expressions, a represents the signal amplitude at the transmission time.

This indicates that, in the transmission data sequence produced according to the present invention, a finite number of transmission data have a range in which the non-periodic cross correlation function is 0 (a range in which continuous 0s are delimited by (-1) in FIG. 6(b) and in aB*Af described above) in an arbitrary combination of a plurality of transmission data sequences. The non-periodic cross correlation function is a periodic cross correlation function when the length is infinite.

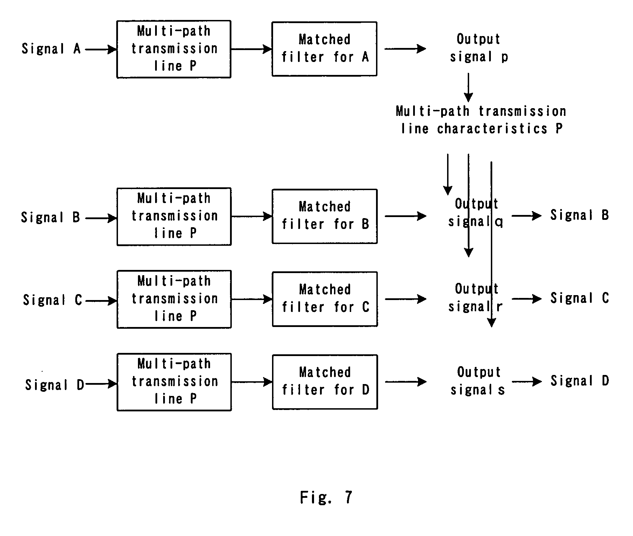

In the communication method according to the present invention, at least one of produced transmission signals can be used as a pilot signal to detect the multi-path characteristics of a multi-path transmission line via which the signal is transmitted and to detect the transmission signal from which the multi-path characteristics are removed. FIG. 7 is a diagram showing the relation between a pilot signal and a transmission signal.

For example, assume that the signal A is a pilot signal in FIG. 7. When this signal is transmitted via the multi-path transmission line P and then passed through the matched filter A for the signal A to produce the output signal p, the multi-path characteristics P of the multi-path transmission line can be obtained from this output signal p.

When the signal B - signal D are transmission signals and are transmitted via the same multi-path transmission line P as that of the pilot signal at the same time, those signals are affected by the same multi-path characteristics from the multi-path transmission line P. Therefore, the output signals q, r, and s, which are received via the matched filters B, C, and D, include the same multi-path characteristics. Thus, removing the multi-path characteristics P from the output signals q, r, and s using the multi-path characteristics P obtained from the pilot signal can produce the transmission signal B, transmission signal C, and transmission signal D.

In the description below, the multi-path characteristics P are represented as p=(p0, p1, p2, p3). pk is a multi-path factor in the delay time of time slots 0, 1, 2, and 3. The multi-path characteristics P can be obtained, for example, by detecting the pilot signal, which is transmitted via the multi-path transmission line, using the matched filter for the pilot signal.

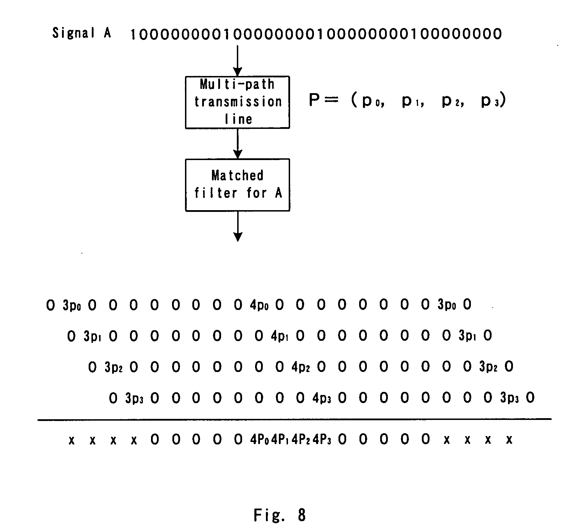

As described above, the transmission signal aA is produced in the transmission data by applying the delay time to a coefficient sequence of the ZCZ sequence. This transmission signal aA is transmitted via the multi-path transmission line P and is detected by the matched filter for the signal A to receive the reception signal aA'. FIG. 8 is a diagram showing the detection of the multi-path characteristics using the pilot signal.

As shown in FIG. 8, aA' can be obtained by adding up the output signals for the delay times and can be expressed by the following expression.

$$aA' = 4a(x, x, ..., x, x, 0, 0, 0, 0, 0, 0, 0, 0, p0,$$

$$p1, p2, p3, 0, 0, 0, 0, 0, x, x, ..., x, x)$$

where x represents some specific value.

Therefore, the reception signal aA' includes the multi-path characteristics P = (p0, p1, p2, p3) in such a way that they can be separated.

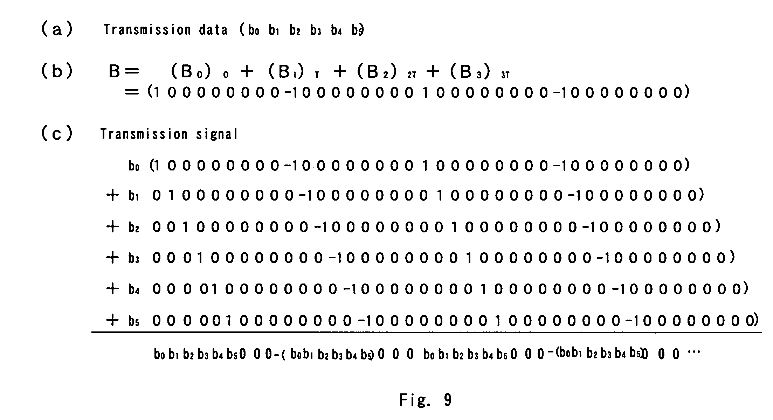

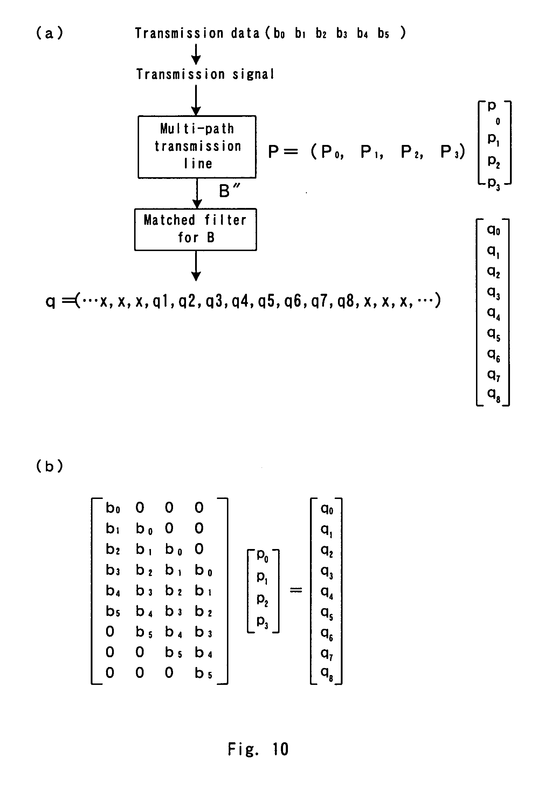

On the other hand, the transmission signal that is transmitted via the same multi-path transmission line can be represented as shown below. FIGS. 9 and 10 are diagrams showing the communication status of the transmission signal.

The transmission data is (b0, b1, b2, b3, b4, b5) (FIG. 9(a)), and the transmission signal is produced using a coefficient sequence different from the one used for producing the pilot signal of the ZCZ sequence.

Let B be another coefficient sequence of the ZCZ sequence. Then, the coefficient sequence can be represented as follows (FIG. 9(b)).

$$B = (B0)0 + (B1)T6 + (B2)2T + (B3)3T$$

The transmission signal is represented as follows using the transmission data and the coefficient sequence B (FIG. 9(c)).

(b0, b1, b2, b3, b4, b5, 0, 0, 0, -b0, -b1, -b2, -b3, -b4, -b5, 0, 0, 0, b0, b1, b2, b3, b4, b5, 0, 0, 0, -b0, -b1, -b2, -b3, -b4, -b5, 0, 0, 0,)

Let B" be the signal that is transmitted via the multi-path transmission line P. Then, the reception signal detected by the matched filter for the signal B can be obtained by the convolution between the signal B" and the matched filter B and is represented as follows.

$$B"*Bf$$

$$=4p0(..., x, 0, 0, 0, b0, b1, b2, b3, b4, b5, 0, 0, 0,$$

x, x, x, x ...)

+ 4p1(..., x, x, 0, 0, 0, b0, b1, b2, b3, b4, b5, 0, 0,

0, x, x, x ...)

+ 4p2(..., x, x, x, 0, 0, 0, b0, b1, b2, b3, b4, b5, 0,

0, 0, x, x, ...)

=4p3(..., x, x, x, x, 0, 0, 0, b0, b1, b2, b3, b4, b5,

0, 0, 0, x, ...)

= (..., x, x, x, x, q1, q2, q3, q4, q5, q6, q7, q8, x,

x, x, x, ...)

where Bf corresponds to the matched filter B.

q1, q2, q3, q4, q5, q6, q7, and q8 can be obtained directly as the output of the matched filter.

FIG. 10(a) is a general diagram showing the relation among the transmission signal, the multi-path characteristics P of the multi-path transmission line, and the output of the matched filter for B. The relation among them can be expressed by the relational expression shown in FIG. 10(a).

From the relational expression shown in FIG. 10(a), (p0, p1, p2, p3) can be obtained by detecting the pilot signal, and (q0, q1, q2, q3, q4, q5, q6, q7, q8) can be obtained by detecting the transmission signal.

Therefore, the transmission data (b0, b1, b2, b3, b4, b5) can be obtained from the expression described above using (p0, p1, p2, p3) and (q0, q1, q2, q3, q4, q5, q6, q7, q8).

Next, the following describes an example of the configuration of a matched filter.

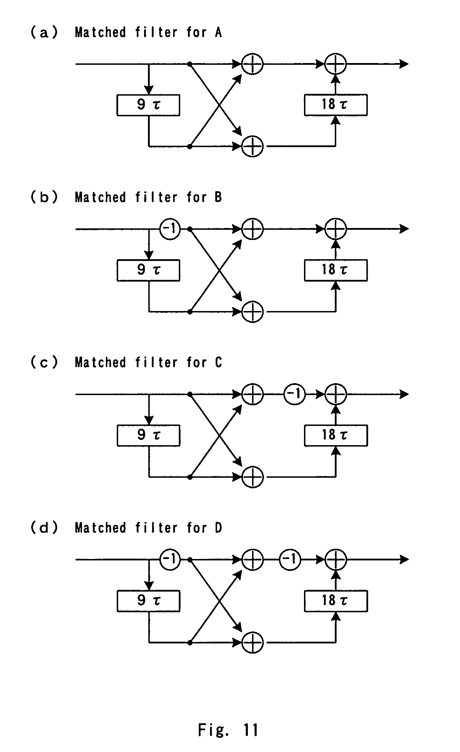

FIG. 11 shows an example of the configuration of matched filters that is an example of matched filters corresponding to the signals A-D shown in FIG. 4. The signals A-D are produced by applying a delay to the ZCZ sequence.

FIG. 11(a) shows an example of the configuration of the matched filter for the signal A corresponding to the first vector row (1, 1, 1, 1) of the sequence shown in FIG. 3 where the delay time of 9τ is used. FIGS. 11 (b), (c), and (d) are examples of the configuration of the matched filters for the signal B, signal C, and signal D for the vector rows (1, -1, 1, -1), (1, 1, -1, -1), and (1, -1, -1, 1) where the delay time of 9τ is also used.

As is apparent from the above description, the method according to the present invention multiplies the transmission data by the coefficients of a ZCZ sequence and delays the transmission data before transmission. This makes the periodic spectrum of the transmission signal a non-correlated spectrum and reduces the increase in the amplitude of the signals.

The reduction in the increase in the amplitude of the signal also reduces the dynamic range of the amplifier on the receiving side.

INDUSTRIAL APPLICABILITY

The transmission signal production method, communication method, and the data structure of the transmission signal according to the present invention are advantageous and are useful for the multi-path environment of mobile communication.

**Claims**

1. A transmission signal production method comprising the steps of multiplying transmission data by coefficients of a predetermined coefficient sequence to produce a plurality of transmission data; adding 0 data of a predetermined length between the plurality of transmission data, produced by multiplying the transmission data by the coefficients, to produce a transmission data sequence; and making the transmission data sequence a transmission signal.

2. The transmission signal production method according to claim 1 wherein said plurality of transmission data, produced by multiplying the transmission data by the coefficients, are delayed longer than a data length of the transmission data and arranged with an interval therebetween and a predetermined number of 0 data are arranged between neighboring transmission data.

3. The transmission signal production method according to claim 1 wherein the plurality of transmission data are produced by multiplying the transmission data, which has a predetermined number of zero data added at an end thereof, by the coefficients of the predetermined coefficient sequence or by adding the predetermined number of 0 data to the end of the transmission data produced by multiplying the transmission data by the coefficients of the predetermined coefficient sequence and
the plurality of transmission data, produced by multiplying the transmission data by the coefficients, are arranged in order of coefficients of a coefficient sequence to produce the transmission data sequence.

4. The transmission signal production method according to one of claims 1-3 wherein
a plurality of transmission data sequences are produced using different coefficient sequences and
in an arbitrary combination of the plurality of transmission data sequences, a finite number of transmission data in the transmission data sequences has a range in which a non-periodic cross-correlation function is 0.

5. The transmission signal production method according to one of claims 1-4 wherein said coefficient sequence is a coefficient sequence of arbitrary vector rows selected from a complete complementary sequence.

6. The transmission signal production method according to claim 5 wherein said complete complementary sequence is produced from a unitary matrix.

7. A communication method comprising the steps of transmitting the transmission data sequence according to one of claims 1-6; and receiving transmission data via a matched filter corresponding to the coefficient sequence used for producing the transmission data sequence.

8. The communication method according to claim 7 wherein said transmission data sequence is used as a pilot signal for measuring multi-path characteristics and the received signal has the multi-path characteristics of a transmission path.

9. The communication method according to claim 7 wherein a plurality of transmission data sequences are produced using different coefficient sequences and

at least one transmission data sequence selected from said transmission data sequences is used as a pilot signal with other transmission data sequences used as transmission signals, further comprising the steps of:

finding multi-path characteristics from the reception signal of the pilot signal; and
removing the multi-path characteristics from the reception signal of the transmission signal using the multi-path characteristics, which are found, to produce the transmission data.

10. A data structure of a transmission signal wherein a plurality of transmission data, produced by multiplying transmission data by coefficients of a predetermined coefficient sequence, are arranged with a predetermined delay time therebetween and 0 data of a predetermined length is added between the transmission data.

11. A data structure of a transmission signal produced by the transmission signal production method according to one of claims 1-6.

Data $(b_0, b_1, \cdots, b_{N-1})$

(a)

$\downarrow$

(b)  $(1, -1, 1, -1)$  $\otimes$  $(b_0, b_1, \cdots, b_{N-1})$

$(b_0, b_1, \cdots, b_{N-1}, 0, \cdots, 0)$

(c)  $B_0$  N

$b_0, b_1, \cdots, b_{N-1}$

T

$\tau$

$B_1$  N  $(-1)$

$b_0, b_1, \cdots, b_{N-1}$

T

$\tau$

$B_2$  N

$b_0, b_1, \cdots, b_{N-1}$

T

$\tau$

$B_3$  N  $(-1)$

$b_0, b_1, \cdots, b_{N-1}$

$\downarrow$

(d)  Transmission data sequence

$b_0, b_1, \cdots, b_{N-1}$  $, 0, \cdots, 0,$  $(-1)$  $b_0, b_1, \cdots, b_{N-1}$  $, 0, \cdots, 0,$  $b_0, b_1, \cdots, b_{N-1}$  $, 0, \cdots, 0,$  $(-1)$  $b_0, b_1, \cdots, b_{N-1}$

Fig. 1

9

$$\begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

Fig. 2

$$A = \begin{matrix} \overbrace{1\,0\,0\,0}^{A_0}\,0\,0\,0\,0\,0\,\overbrace{1\,0\,0\,0}^{A_1}\,0\,0\,0\,0\,0\,\overbrace{1\,0\,0\,0}^{A_2}\,0\,0\,0\,0\,0\,\overbrace{1\,0\,0\,0}^{A_3}\,0\,0\,0\,0\,0 \end{matrix}$$

$$B = \begin{matrix} \overbrace{1\,0\,0\,0}^{B_0}\,0\,0\,0\,0\,0\,\overbrace{-1\,0\,0\,0}^{B_1}\,0\,0\,0\,0\,0\,\overbrace{1\,0\,0\,0}^{B_2}\,0\,0\,0\,0\,0\,\overbrace{-1\,0\,0\,0}^{B_3}\,0\,0\,0\,0\,0 \end{matrix}$$

$$C = \begin{matrix} \overbrace{1\,0\,0\,0}^{C_0}\,0\,0\,0\,0\,0\,\overbrace{1\,0\,0\,0}^{C_1}\,0\,0\,0\,0\,0\,\overbrace{-1\,0\,0\,0}^{C_2}\,0\,0\,0\,0\,0\,\overbrace{-1\,0\,0\,0}^{C_3}\,0\,0\,0\,0\,0 \end{matrix}$$

$$D = \begin{matrix} \overbrace{1\,0\,0\,0}^{D_0}\,0\,0\,0\,0\,0\,\overbrace{-1\,0\,0\,0}^{D_1}\,0\,0\,0\,0\,0\,\overbrace{-1\,0\,0\,0}^{D_2}\,0\,0\,0\,0\,0\,\overbrace{1\,0\,0\,0}^{D_3}\,0\,0\,0\,0\,0 \end{matrix}$$

Fig. 3

EP 1 545 020 A1

(a)

$$A = (a_0, \quad a_1, \quad \cdots, \quad a_N)$$
$$B = (b_0, \quad b_1, \quad \cdots, \quad b_N)$$
$$C = (c_0, \quad c_1, \quad \cdots, \quad C_N)$$
$$D = (d_0, \quad d_1, \quad \cdots, \quad d_N)$$

$$\begin{bmatrix} A, 0, \cdots, 0, A, 0, \cdots, 0, A, 0, \cdots, 0, & A, 0, \cdots, 0 \\ B, 0, \cdots, 0, -B, 0, \cdots, 0, B, 0, \cdots, 0, & -B, 0, \cdots, 0 \\ C, 0, \cdots, 0, C, 0, \cdots, 0, -C, 0, \cdots, 0, & -C, 0, \cdots, 0 \\ D, 0, \cdots, 0, -D\,0, \cdots, 0, -D, 0, \cdots, 0, & D, 0, \cdots, 0 \end{bmatrix}$$

(b)

$$A = (a_0, \quad a_1, \quad \cdots, \quad a_{N-1}, 0, \cdots, 0)$$
$$B = (b_0, \quad b_1, \quad \cdots, \quad b_{N-1}, 0, \cdots, 0)$$
$$C = (c_0, \quad c_1, \quad \cdots, \quad c_{N-1}, 0, \cdots, 0)$$
$$D = (d_0, \quad d_1, \quad \cdots, \quad d_{N-1}, 0, \cdots, 0)$$

$$\begin{bmatrix} A, & A, & A, & A \\ B, & -B, & B, & -B \\ C, & C, & -C, & -C \\ D, & -D, & -D, & D \end{bmatrix}$$

Fig. 4

(a)

Signal A → | Matched filter for A | →

Signal A → | Matched filter for B | →

Signal A → | Matched filter for C | →

Signal A → | Matched filter for D | →

(b)

Signal B → | Matched filter for A | →

Signal B → | Matched filter for B | →

Signal B → | Matched filter for C | →

Signal B → | Matched filter for D | →

Fig. 5

(a)

Signal A    1000000000100000000010000000001000000000

Matched filter
for A

···003000000000400000000030000000020000000···

(b)

Signal B    100000000-100000000-1000000000100000000

Matched filter
for A

···00-100000000000000000-100000000000000000···

Fig. 6

Signal A ──▶ ┌─────────────┐      ┌─────────────┐
             │ Multi-path  │      │             │
             │ transmission│ ──▶  │  Matched    │ ──▶    Output
             │   line P    │      │ filter for A│        signal p
             └─────────────┘      └─────────────┘            │
                                                             ▼
                                          Multi-path transmission
                                            line characteristics P
                                              │        │    │
                                              ▼        │    │
Signal B ──▶ ┌─────────────┐      ┌─────────────┐      ▼    │
             │ Multi-path  │      │             │    Output │ ──▶  Signal B
             │ transmission│ ──▶  │  Matched    │ ──▶ signal q
             │   line P    │      │ filter for B│      │    │
             └─────────────┘      └─────────────┘      ▼    │
                                                       │    │
Signal C ──▶ ┌─────────────┐      ┌─────────────┐      │    ▼
             │ Multi-path  │      │             │    Output ──▶  Signal C
             │ transmission│ ──▶  │  Matched    │ ──▶ signal r
             │   line P    │      │ filter for C│
             └─────────────┘      └─────────────┘

Signal D ──▶ ┌─────────────┐      ┌─────────────┐
             │ Multi-path  │      │             │    Output ──▶  Signal D
             │ transmission│ ──▶  │  Matched    │ ──▶ signal s
             │   line P    │      │ filter for D│
             └─────────────┘      └─────────────┘

Fig. 7

15

Signal A  100000000100000000100000000100000000

```
         ┌──────────────┐
         │ Multi-path   │
         │ transmission │   P＝ ( p₀,  p₁,  p₂,  p₃)
         │    line      │
         └──────────────┘
                │
                ▼
         ┌──────────────┐
         │   Matched    │
         │ filter for A │
         └──────────────┘
                │
                ▼
```

$P = (p_0, \ p_1, \ p_2, \ p_3)$

O 3p₀ O  O  O  O  O  O  O  O 4p₀ O  O  O  O  O  O  O  O  O 3p₀ O

   O 3p₁ O  O  O  O  O  O  O  O 4p₁ O  O  O  O  O  O  O  O  O 3p₁ O

      O 3p₂ O  O  O  O  O  O  O  O 4p₂ O  O  O  O  O  O  O  O  O 3p₂ O

         O 3p₃ O  O  O  O  O  O  O  O 4p₃ O  O  O  O  O  O  O  O  O 3p₃ O

─────────────────────────────────────────────────────────────────

x  x  x  x  O  O  O  O  O 4P₀4P₁4P₂4P₃ O  O  O  O  O  x  x  x  x

Fig. 8

EP 1 545 020 A1

(a)    Transmission data $(b_0\ b_1\ b_2\ b_3\ b_4\ b_5)$

(b)    $B = (B_0)_0 + (B_1)_T + (B_2)_{2T} + (B_3)_{3T}$
       $= (1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

(c)    Transmission signal

       $b_0$ $(1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

       $+\ b_1$ $0\ 1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

       $+\ b_2$ $0\ 0\ 1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

       $+\ b_3$ $0\ 0\ 0\ 1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

       $+\ b_4$ $0\ 0\ 0\ 0\ 1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

       $+\ b_5$ $0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0\ 1\ 0\ 0\ 0\ 0\ 0\ 0\ 0\ 0\ \text{-}1\ 0\ 0\ 0\ 0\ 0\ 0\ 0\ 0)$

---

$b_0\ b_1\ b_2\ b_3\ b_4\ b_5\ 0\ \ 0\ 0\ \text{-}(\,b_0 b_1\ b_2\ b_3\ b_4\ b_5)\ 0\ \ 0\ \ 0\ \ b_0\ b_1\ b_2\ b_3\ b_4\ b_5\ 0\ \ 0\ 0\ \text{-}(b_0 b_1\ b_2\ b_3\ b_4\ b_5)\ \ 0\ \ 0\ \cdots$

Fig. 9

(a)

Transmission data ($b_0$ $b_1$ $b_2$ $b_3$ $b_4$ $b_5$ )

Transmission signal

Multi-path transmission line

$$P = (P_0, \ P_1, \ P_2, \ P_3) \begin{bmatrix} p_0 \\ p_1 \\ p_2 \\ p_3 \end{bmatrix}$$

B″

Matched filter for B

$$q = (\cdots x, x, x, q1, q2, q3, q4, q5, q6, q7, q8, x, x, x, \cdots)$$

$$\begin{bmatrix} q_0 \\ q_1 \\ q_2 \\ q_3 \\ q_4 \\ q_5 \\ q_6 \\ q_7 \\ q_8 \end{bmatrix}$$

(b)

$$\begin{bmatrix} b_0 & 0 & 0 & 0 \\ b_1 & b_0 & 0 & 0 \\ b_2 & b_1 & b_0 & 0 \\ b_3 & b_2 & b_1 & b_0 \\ b_4 & b_3 & b_2 & b_1 \\ b_5 & b_4 & b_3 & b_2 \\ 0 & b_5 & b_4 & b_3 \\ 0 & 0 & b_5 & b_4 \\ 0 & 0 & 0 & b_5 \end{bmatrix} \begin{bmatrix} p_0 \\ p_1 \\ p_2 \\ p_3 \end{bmatrix} = \begin{bmatrix} q_0 \\ q_1 \\ q_2 \\ q_3 \\ q_4 \\ q_5 \\ q_6 \\ q_7 \\ q_8 \end{bmatrix}$$

Fig. 10

(a) Matched filter for A

(b) Matched filter for B

(c) Matched filter for C

(d) Matched filter for D

Fig. 11

$A_0 = (+++-++-+)$

$$
\begin{array}{l}
+++-++-+ \\
\phantom{+}+++-++-+ \\
\phantom{++}+++-++-+ \\
\hline
1\ 2\ 3\ 1\ 1\ 1\ 1\ 1\ 0\ 1
\end{array}
$$

Fig. 12

| INTERNATIONAL SEARCH REPORT | International application No. |
|---|---|
| | PCT/JP03/11017 |

**A. CLASSIFICATION OF SUBJECT MATTER**
Int.Cl⁷ H04B1/707

According to International Patent Classification (IPC) or to both national classification and IPC

**B. FIELDS SEARCHED**

Minimum documentation searched (classification system followed by classification symbols)
Int.Cl⁷ H04J13/00-13/06, H04B1/69-1/713

Documentation searched other than minimum documentation to the extent that such documents are included in the fields searched
Jitsuyo Shinan Koho        1922-1996   Jitsuyo Shinan Toroku Koho   1996-2003
Kokai Jitsuyo Shinan Koho   1971-2003   Toroku Jitsuyo Shinan Koho   1994-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 63-2384 B2 (Kyosan Electric Mfg. Co., Ltd., Railway Technical Research Institute), 19 January, 1988 (19.01.88), Fig. 1 (Family: none) | 1-3,10,11 |
| A | JP 2002-217778 A (Toyo Communication Equipment Co., Ltd.), 02 August, 2002 (02.08.02), Par. Nos. [0014] to [0027]; Fig. 1 (Family: none) | 1-11 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 October, 2003 (01.10.03) | 14 October, 2003 (14.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| | International application No. |
|---|---|
| | PCT/JP03/11017 |

C (Continuation).  DOCUMENTS CONSIDERED TO BE RELEVANT

| Category* | Citation of document, with indication, where appropriate, of the relevant passages | Relevant to claim No. |
|---|---|---|
| A | Keisuke HIGUMA, Naoki SUEHIRO, Toshiaki IMOTO, Noriyoshi KUROYANAGI, 'Jikan Kakusan Singojo deno Multi Pass Tokusei Gyoretsu o Mochiita Kokoritsu Musen Shuhasu Riyo Hoshiki no Simulation', The Institute of Electronics, Information and Communication Engineers Gijutsu Kenkyu Hokoku, Vol.101, No.128, 22 June, 2001 (22.06.01), SST2001-20, pages 21 to 27 | 1-11 |

Form PCT/ISA/210 (continuation of second sheet) (July 1998)